(19) Europäisches Patentamt
European Patent Office
Office européen des brevets

(11) EP 0 687 282 B1

(12) **EUROPÄISCHE PATENTSCHRIFT**

(45) Veröffentlichungstag und Bekanntmachung des Hinweises auf die Patenterteilung:
**06.05.1998 Patentblatt 1998/19**

(21) Anmeldenummer: **94909026.0**

(22) Anmeldetag: **23.02.1994**

(51) Int Cl.[6]: **C08G 69/08**, C08G 69/10, C08G 73/10, C11D 3/37

(86) Internationale Anmeldenummer:
**PCT/EP94/00511**

(87) Internationale Veröffentlichungsnummer:
**WO 94/20563 (15.09.1994 Gazette 1994/21)**

(54) **VERFAHREN ZUR HERSTELLUNG VON UMSETZUNGSPRODUKTEN AUS POLYASPARAGINSÄUREIMID UND AMINOSÄUREN UND IHRE VERWENDUNG**

PROCESS FOR PREPARING PRODUCTS FROM THE REACTION OF POLYASPARAGINIC ACID IMIDES WITH AMINOACIDS, AND USE OF THESE PRODUCTS

PROCEDE DE PREPARATION DES PRODUITS DE LA REACTION D'IMIDES D'ACIDE POLYASPARAGINIQUE ET D'ACIDES AMINES, ET UTILISATION DE CES PRODUITS

(84) Benannte Vertragsstaaten:
**BE DE ES FR GB IT NL SE**

(30) Priorität: **06.03.1993 DE 4307114**

(43) Veröffentlichungstag der Anmeldung:
**20.12.1995 Patentblatt 1995/51**

(73) Patentinhaber: **BASF Aktiengesellschaft**
**67063 Ludwigshafen (DE)**

(72) Erfinder:
- **KRONER, Matthias**
  **D-67304 Eisenberg (DE)**
- **SCHORNICK, Gunnar**
  **D-67271 Neuleiningen (DE)**
- **BOECKH, Dieter**
  **D-67117 Limburgerhof (DE)**
- **BAUR, Richard**
  **D-67112 Mutterstadt (DE)**
- **POTTHOFF-KARL, Birgit**
  **D-67061 Ludwigshafen (DE)**
- **SCHWENDEMANN, Volker**
  **D-67434 Neustadt (DE)**
- **SCHADE, Christian**
  **D-67061 Ludwigshafen (DE)**
- **KUD, Alexander**
  **D-55234 Eppelsheim (DE)**

(56) Entgegenhaltungen:
**EP-A- 0 256 366**
**EP-A- 0 406 623**
**DE-A- 2 253 190**
**US-A- 3 846 380**

EP 0 687 282 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren zur Herstellung von Umsetzungsprodukten aus Polyasparaginsäureimid und Aminosäuren und die Verwendung der Umsetzungsprodukte als Zusatz zu Wasch- und Reinigungsmitteln, als Scale-Inhibitor und als Dispergiermittel.

Die Herstellung von Polyasparaginsäureimiden durch thermische Polymerisation von Asparaginsäure gegebenenfalls zusammen mit anderen Aminosäuren ist beispielsweise aus der US-A-3 052 655, der DE-A-4 023 463 und der US-A-5 057 597 bekannt.

Aus der DE-A-2 032 470 ist ein Verfahren zur Herstellung von Polyasparaginsäurehydroxyalkylamiden durch Umsetzung von Polyasparaginsäureimiden mit Alkanolaminen in einer Lösung von Dimethylformamid oder Dimethylsulfoxid bekannt. Die Umsetzungsprodukte werden als Plasmastreckmittel verwendet.

Aus der DE-A-2 253 190 ist bekannt, mit langkettigen Alkylaminen umgesetzte Polyasparaginsäureimide als Tenside in Waschmitteln zu verwenden. Die Umsetzung wird in Dimethylformamid als Lösemittel durchgeführt.

In J. Med. Chem. Band 16, 893 (1973) wird die Herstellung von Umsetzungsprodukten aus Polyasparaginsäureimiden und Ethanolamin sowie die Verwendung der Umsetzungsprodukte als Blutplasmaexpander beschrieben.

Aus der EP-A-0 406 623 ist die Verwendung von Umsetzungsprodukten aus Polyasparaginsäureimiden mit Aminoverbindungen als Überzugsmittel und/oder Retardierungsmittel-für Arzneiformen von therapeutischen Wirkstoffen und für Lebensmittel und Genußmittel bekannt. Die Umsetzungen werden in Dimethylformamid als Lösemittel vorgenommen.

Wie aus dem oben angegebenen Stand der Technik hervorgeht, wird die Umsetzung von Polyasparaginsäureimiden in Lösemitteln wie Dimethylformamid oder Dimethylsulfoxid vorgenommen. Die Abtrennung dieser Lösemittel von den Umsetzungsprodukten ist technisch aufwendig. Zudem wirkt Dimethylformamid toxisch und fruchtschädigend.

Der vorliegenden Erfindung liegt daher die Aufgabe zugrunde ein verbessertes Verfahren zur Herstellung von Umsetzungsprodukten aus Polyasparaginsäureimid und NH-Gruppen enthaltenden Verbindungen zur Verfügung zu stellen. Eine weitere Aufgabe der Erfindung besteht darin, neue Anwendungen von Umsetzungsprodukten aus Polyasparaginsäureimiden und NH-Gruppen enthaltenden Verbindungen aufzuzeigen.

Die zuerst genannte Aufgabe wird gelöst mit einem Verfahren zur Herstellung von Umsetzungsprodukten aus Polyasparaginsäureimiden und Aminosäuren, wenn man Aminosäuren mit Polyasparaginsäureimiden in wäßrigem Medium bei pH-Werten reagieren läßt, bei denen mindestens 5 % der Aminogruppen der Aminosäuren in nichtprotonierter Form im Gleichgewicht mit der protonierten Form vorliegen.

Die zweite Aufgabe wird gelöst mit der Verwendung von Umsetzungsprodukten aus Polyasparaginsäureimiden mit Aminosäuren als Zusatz zu Wasch- und Reinigungsmitteln, als Scale-Inhibitor oder als Dispergiermittel.

Die als Ausgangsprodukt in Betracht kommenden Polyasparaginsäureimide können nach allen bekannten Verfahren hergestellt werden, z.B. durch Polykondensation von L- oder DL-Asparginsäure bei Temperaturen von 190 bis 270°C, durch Polykondensation von L- oder DL-Asparaginsäure in Gegenwart von 0,1 bis 10 Mol, bezogen auf 1 Mol Asparaginsäure an Phosphorsäure, Polyphosphorsäure, phosphoriger Säure, unterphosphoriger Säure oder Chlorwasserstoffsäure. Bei Mengen von mindestens 2 Mol Phosphorsäure pro Mol Asparaginsäure wird die Polykondensation der Asparaginsäure nach Art einer Lösungspolykondensation durchgeführt, während bei Anwesenheit geringerer Mengen an Phosphorsäure die Polykondensation in zusammenhängender fester oder hochviskoser Phase erfolgt. Polyasparaginsäureimid kann auch aus den Ammoniumsalzen oder Amiden von Fumarsäure, Maleinsäure oder Äpfelsäure durch Erhitzen auf Temperaturen bis zu 250°C hergestellt werden. Maleinsäuremonoamid und das Ammoniumsalz von Maleinsäuremonoamid erhält man besonders bevorzugt durch Reaktion von festem oder geschmolzenem Maleinsäureanhydrid mit gasförmigem Ammoniak in Substanz in Form einer Fest-Gasphasenreaktion. Auch das durch Polykondensation von Acetylasparaginsäure erhaltene Polyasparaginsäureimid kann als Ausgangsstoff verwendet werden. Die Polyasparaginsäureimide haben üblicherweise K-Werte von 8 bis 50 (bestimmt nach H. Fikentscher in 1 %iger Lösung in Dimethylformamid bei 25°C). Die Polyasparaginsäureimide werden in der Regel soweit modifiziert, daß pro Mol Asparaginsäureimideinheit 0,01 bis 1 Mol Aminosäuren, angelagert werden.

Zur Modifizierung der Polyasparaginsäureimide eignen sich alle Aminosäuren, die mindestens eine freie NH-Gruppe aufweisen, Beispiele sind L- oder DL-Aminosäuren, wie beispielsweise sämtliche Aminodicarbonsäuren wie Asparaginsäure, Glutaminsäure und Cystin, neutrale Aminosäuren wie Glycin, Alanin, β-Alanin, Valin, Leucin, Methionin, Cystein, Aminocapronsäure und Caprolactam, Asparagin, Isoasparagin, Glutamin und Isoglutamin, N-Methylaminosäuren wie N-Methylglycin) Aminosulfonsäuren wie Taurin, Hydroxycarbonsäuren wie Hydroxyprolin, Serin und Threonin und Iminocarbonsäuren wie Prolin und Iminodiessigsäure sowie aromatische und heterocyclische Aminosäuren wie Anthranilsäure, Tryptophan, Tyrosin und Histidin sowie Aminotricarbonsäuren wie α- oder β-Aminotricarballylsäure, basische Diaminocarbonsäuren wie Lysin, Lysinhydrochlorid, Arginin, Histidin sowie α-Aminocaprolactam.

Die Umsetzung der Aminosäuren mit Polyasparaginsäureimiden erfolgt in wäßrigem Medium bei pH-Werten, bei denen mindestens 5 % der Aminogruppen der Aminosäuren in nichtprotonierter Form im Gleichgewicht mit der protonierten Form vorliegen. Die Wahl des pH-Wertes des wäßrigen Mediums beeinflußt den Ladungszustand der Aminosäuren und deshalb auch deren Reaktivität.

Das Dissoziationsverhalten von Aminosäuren wird durch $pK_s$-Werte charakterisiert. Neutrale Aminosäuren wie beispielsweise Glycin, besitzen zwei $pK_s$-Werte $pK_{s1}$ und $pK_{s2}$. Aminodicarbonsäuren und Diaminocarbonsäuren besitzen 3 $pK_s$-Werte $pK_{s1}$, $PK_{s2}$ und $pK_{s3}$ (vgl. Jakubke, Jeschkeit, Aminosäuren, Peptide, Proteine, Verlag Chemie, Seite 40). In Abhängigkeit von der Struktur der Aminosäuren stellt man die pH-Werte der Reaktionslösung auf folgende Mindestwerte ein:

- neutrale Aminosäuren werden auf pH-Werte oberhalb des isoelektrischen Punktes eingestellt, bevorzugt oberhalb $pK_{s2}$, wo über 50 % der Aminogruppen nichtprotoniert vorliegt.
- Aminodicarbonsäuren werden auf pH-Werte eingestellt, die dem arithmetischen Mittel aus der 2. und 3. Dissoziationskonstante entsprechen, also bei pH-Werten oberhalb pH > = 1/2 ($pK_{s2}$ + $pK_{s3}$), bevorzugt bei pH-Werten oberhalb $pK_{s3}$.
- Diaminocarbonsäuren werden auf pH-Werte eingestellt, die dem arithm. Mittel aus der 1. und 2. Dissoziationskonstante entsprechen, also bei pH-Werten oberhalb pH > = 1/2 ($pK_{s1}$ + $pK_{s2}$), bevorzugt bei pH-Werten oberhalb $pK_{s2}$.

Beispiele für Dissoziationskonstanten für die einzelnen Carbonsäure- und Aminogruppen können der Literatur entnommen werden (vgl. Jakubke, Jeschkeit, Aminosäuren, Peptide, Proteine, Verlag Chemie 1982, Seite 38-40).

Ausgewählte Beispiele für bevorzugte Aminosäuren sind:

| | | |
|---|---|---|
| Glycin | pH > 6,0 | bevorzugt pH > 9,6 |
| Asparaginsäure | pH > 6,6, | bevorzugt pH > 9,6 |
| Glutaminsäure | pH > 7,1, | bevorzugt pH > 9,6 |
| Lysin | pH > 5,5, | bevorzugt pH > 9,1 |

Die Reaktionsbereitschaft der Aminogruppen von Aminosäuren kann erhöht werden, wenn Aminosäuren in neutralisierter Form eingesetzt werden.

Beispielsweise wird bei Aminodicarbonsäuren, Aminotricarbonsäuren, neutralen Aminosäuren oder Diaminocarbonsäuren eine, beide oder drei Carboxylgruppen während der Reaktion mit dem Polyasparaginsäureimid durch Alkalien vollständig oder teilweise neutralisiert, so daß der pH-Wert oberhalb 6, bevorzugt zwischen 8 und 13 liegt und mindestens 5 % der Aminogruppen in nichtprotonierter Form im Protonierungsgleichgewicht vorliegen.

Pro Mol Aminodicarbonsäure wird bis zu 2 Mol Alkali und bei Aminomonocarbonsäuren und Diaminocarbonsäuren bis zu 1 Mol Alkali kontinuierlich oder absatzweise während der Umsetzung zugefügt. Diaminocarbonsäuren können auch ohne zusätzliche Alkalien zur Reaktion gebracht werden. Um eine höhere Reaktivität zu erlangen, können sie jedoch auch in vollständig oder teilweise mit Basen neutralisierter Form eingesetzt werden.

Zur besseren Haltbarkeit werden Aminosäuren in Form von Hydrochloriden gelagert. Beispielsweise ist Lysinhydrochlorid eine marktübliche Form von Lysin. Wird Lysinhydrochlorid eingesetzt, so können bis zu 2 Mol Alkalien pro Mol Lysinhydrochlorid angewendet werden, wobei 1 Mol Alkali zur Neutralisation der Chlorwasserstoffsäure verbraucht wird.

Die Neutralisation der Aminosäuren kann vor oder während der Reaktion mit Polyasparaginsäureimid erfolgen. Zur Neutralisation verwendet man Basen, wie Alkalien, beispielsweise Natriumhydroxid, Kaliumhydroxid, Natriumhydrogencarbonat, Kaliumhydrogencarbonat, Natriumcarbonat und Kaliumcarbonat, sowie tert. Amine wie Triethanolamin und Triethylamin, primäre Amine wie Butylamin und Ethanolamin, oder sekundäre Amine wie Morpholin. Auch Ammoniak ist als Base geeignet, ebenso können Barium- und Calciumhydroxid eingesetzt werden.

Die Umsetzungen werden in Wasser als Verdünnungsmittel durchgeführt, in dem die Aminosäuren in neutralisierter Form löslich sind. Die Konzentration an Aminosäuren ist so zu wählen, daß möglichst konzentrierte oder gesättigte Lösungen der Aminosäuresalze entstehen. Bevorzugt werden 1 bis 20, bevorzugt 5 bis 15 molare Aminosäuresalzlösungen eingesetzt.

Aminosäuren, die nur eine Aminogruppe enthalten, werden üblicherweise auf einen pH-Wert von mindestens 7 eingestellt, während man zwei Aminogruppen enthaltende Aminosäuren auch in Form der freien Säuren umsetzen kann. Die Umsetzung wird üblicherweise bei pH-Werten oberhalb 6, bevorzugt in dem pH-Bereich von 8 bis 13 vorgenommen. Höhere pH-Werte und höhere Konzentrationen an Aminosäuren sowie höhere Temperaturen führen zu einem schnelleren Ablauf der Reaktion. Die Reaktionstemperaturen liegen üblicherweise bei 0 bis 100, vorzugsweise 20 bis 70°C. Die Reaktionszeiten betragen in Abhängigkeit von der Reaktivität der Aminosäuren 1 bis 20 Stunden.

Eine besonders wirtschaftliche Verfahrensvariante ergibt sich dadurch, daß man zunächst die Polykondensation

von Asparaginsäure zum Asparaginsäureimid durchführt, wobei man die Polykondensation bei einem Umsatz von ca. 50 bis 95 % abbricht, so daß im Reaktionsgemisch noch freie Asparaginsäure vorhanden ist. Beispielsweise kann man Asparaginsäurekristalle oder -pulver bei Temperaturen in dem Bereich von 200 bis 280°C nur bis zu 80 % polykondensieren und anschließend die nichtumgesetzte Asparaginsäure an das entstandene Polyasparaginsäureimid in wäßrigem Medium anlagern, indem man das Asparaginsäure enthaltende Polyasparaginsäureimid in Wasser aufschlämmt und mit einer Base versetzt, so daß der pH-Wert oberhalb von 6, vorzugsweise 8 bis 13 beträgt. Man fügt solange Alkali kontinuierlich zu, bis sich das Polykondensat gelöst hat. Die wäßrige Lösung enthält dann das Umsetzungsprodukt aus Asparaginsäure und Polyasparaginsäureimid in der Salzform.

Die Umsetzungsprodukte können die Strukureinheiten I bis IV enthalten

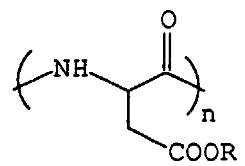 (I) 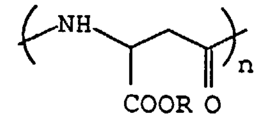 (II)

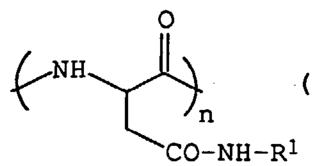 (III) 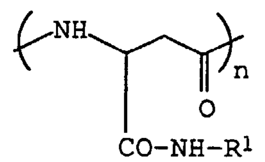 (IV)

In den Strukturen I bis IV bedeutet R = H, Alkali, Erdalkali, Ammonium und $H \cdot H_2N^+ - R^1$ mit $R^1$= Aminosäurerest und n= 3 bis 3000, vorzugsweise n = 5 bis 1000.

In der Struktur I liegen α-verknüpfte Asparaginsäuren in der Säureform oder in Form der Alkali-, Erdalkali- oder Ammoniumsalze sowie auch salzartig mit der Aminosäure verbunden vor. Die Struktur II zeigt β-verknüpfte Asparaginsäuren mit den jeweiligen Bedeutungen für den Substituenten R, während die Struktur III α-verknüpfte Asparaginsäuren veranschaulicht, die den Aminosäurerest amidartig gebunden enthält und die Struktur IV für eine β-verknüpfte Asparaginsäure steht, die den Aminosäurerest amidartig gebunden enthält. Die Anteile der Strukturen I bis IV im Reaktionsprodukt können in beliebigem Verhältnis zueinander stehen. Vorzugsweise sind die Aminosäuren in den Umsetzungsprodukten über die Strukturen III und IV gemeinsam zu mindestens 1, vorzugsweise zu 5 bis 70 Mol-%, bezogen auf die eingesetzte Aminosäure, enthalten.

Aussagen über die Struktur der Umsetzungsprodukte und die in den Umsetzungsprodukten enthaltenen Anteile an Strukturelementen I bis IV können mittels H-NMR und C-NMR gemacht werden, wobei als Lösemittel bevorzugt $D_2O$ verwendet wird. Die α-CH-Signale in den Spektren von Aminosäuren sind geeignete Indikatoren, um zu erkennen, ob die Aminogruppe der Aminosäure frei vorliegt oder durch eine Carbonsäuregruppe der Polyasparaginsäure amidartig gebunden ist. Aus dem Verhältnis der Intensität der Signale kann man ermitteln, welcher Anteil der Aminosäure mit Polyasparaginsäure unter Bildung der Struktureinheiten I bis IV reagiert hat und welche Anteile der Strukturelemente I bis IV vorliegen.

Die oben beschriebenen Umsetzungsprodukte aus Polyasparaginsäureimiden und Aminosäuren werden als Zusatz zu pulverförmigen oder flüssigen phosphatreduzierten oder phosphatfreien Wasch- und Reinigungsmitteln verwendet. Die Einsatzmengen liegen in dem Bereich von 0,5 bis 30, vorzugsweise 1 bis 10 Gew.-%. In Geschirrspülmitteln und maschinellen Reinigern für die Flaschenwäsche können die Anwendungsmengen bis 50 Gew.-% betragen.

Unter phosphatreduzierten Wasch- und Reinigungsmitteln sollen solche Formulierungen verstanden werden, die weniger als 25 Gew.-% an Phosphat, berechnet als Pentanatriumtriphosphat, enthalten. Die Zusammensetzung von pulverförmigen Waschmittelformulierungen kann sehr unterschiedlich sein. Phosphatfreie Waschmittelformulierungen, besonders konzentrierte, pulverförmige Kompaktwaschmittel können neben den üblichen Tensidanteilen als Builder Zeolith und/oder Schichtsilikate in Form kristalliner oder amorpher pulverförmiger hydratisierter Natronwassergläser enthalten. Silikate dieser Art sind bekannt, vgl. EP-B-0164514 und EP-A-0444415. Gleiches gilt für die Zusammensetzung von Reinigungsmittelformulierungen. Wasch- und Reinigungsmittelformulierungen enthalten üblicherweise Tenside in Mengen von 1 bis 50 Gew.-%, in einigen Fällen sogar noch höhere Mengen an Tensid, und gegebenenfalls Builder. Diese Angaben gelten sowohl für flüssige als auch für pulverförmige Wasch- und Reinigungsmittelformulierungen. Beispiele für die Zusammensetzung von Waschformulierungen, die in Europa, in den USA und in Japan gebräuchlich sind, findet man beispielsweise in Chemical und Engn. News, Band 67, 35 (1989) tabellarisch dargestellt

sowie in Ullmanns Encyklopädie der technischen Chemie, Verlag Chemie, Weinheim 1983, 4. Auflage, Seiten 63-160. Weitere Angaben über die Zusammensetzung von Wasch- und Reinigungsmitteln können der WO-A-90/13581 entnommen werden.

Die erfindungsgemäß zu verwendenden Umsetzungsprodukte können problemlos in die Wasch- und Reinigungsmittelformulierungen eingearbeitet werden und können aufgrund der Tatsache, daß sie die Viskosität wasserhaltiger Tenside stark erniedrigen, als Viskositätserniedriger eingesetzt werden.

Die oben beschriebenen Umsetzungsprodukte eignen sich außerdem als Scale-Inhibitoren, die beispielsweise bei der Meerwasserentsalzung, zur Verhinderung von Inkrustationen bei gleichzeitigem Korrosionsschutz in wasserführenden Systemen, z.B. in Kühl- und Warmwasserkreisläufen, Koch- und Verdampfstationen, Wärmetauschern, Turbinen und Pumpen oder als Belagsverhinderer bei der Eindampfung von Zuckersäften eingesetzt werden. Scale-inhibitoren werden üblicherweise in Mengen von 0,1 bis 1000, vorzugsweise 1 bis 500 ppm im zu behandelnden wäßrigen Medium zugesetzt.

Die Umsetzungsprodukte aus Polyasparaginsäureimiden und Aminosäuren, Alkanolaminen oder aminierten $C_1$- bis $C_{30}$-Fettalkoholalkoxilaten, die bis zu 100 Mol Ethylenoxid und/oder Propylenoxid pro Mol Fettalkohol einpolymerisiert enthalten, werden auch als Dispergiermittel verwendet, z.B. zum Dispergieren von Pigmenten in Wasser, um hochkonzentrierte Pigmentanschlämmungen herzustellen, z.B. werden solche Umsetzungsprodukte zur Herstellung von wäßrigen Aufschlämmungen aus Eisen, Kohle, Mineralien, Tonen, Lehm, oxidischen, sulfidischen Mineralien, Phosphaten, Sulfaten, Carbonate, Kreide, Gips und Clay verwendet. Die Einsatzmengen als Dispergiermittel liegen in dem Bereich von 0,1 bis 5, vorzugsweise 0,2 bis 2 Gew.-%, bezogen auf das Pigment.

Die Umsetzungsprodukte aus Polyasparaginsäureimiden und Aminosäuren, Alkanolaminen oder aminierten $C_1$- bis $C_{30}$-Fettalkoholalkoxilaten, die bis zu 50 Mol-% Ethylenoxid und/oder Propylenoxid pro Mol Fettalkohol einpolymerisiert enthalten, haben K-Werte in dem Bereich von 8 bis 150, vorzugsweise 9 bis 100 (bestimmt nach H. Fikentscher in wäßriger Lösung bei pH 7 am Natriumsalz der Umsetzungsprodukte und bei 25°C).

Die Prozentangaben in den Beispielen sind - sofern nichts anderes angegeben ist - Gewichtsprozent. Die K-Werte wurden nach H. Fikentscher, Cellulose-Chemie, Band 13, 58 bis 64 und 71 bis 74 (1932) in 1 gew.-%iger Lösung in Form der Natrium-Salze bei pH 7 und 25°C gemessen. Die K-Werte des Polyasparaginsäureimids wurden in Dimethylformamid bei einer Polymerkonzentration von 1 Gew.-% und 25°C bestimmt.

Beispiele

Herstellung von Polyasparaginsäureimid

L-Asparaginsäurekristalle werden in einer Porzellanschale bei 220°C in einem Trockenschrank solange kondensiert, bis das Gewicht konstant bleibt. Das Polykondensat besitzt in 1 %iger Lösung in Dimethylformamid einen K-Wert von 18,6.

Vergleichsbeispiel 1

1 g des oben beschriebenen Polyasparaginsäureimids wird in 20 ml Wasser bei einer Temperatur von 60°C aufgerührt und so tropfenweise mit 10 %iger wäßriger Natronlauge versetzt, daß der pH-Wert der Reaktionslösung zwischen 8 und 10 liegt. Man erhält eine klare wäßrige Polymerlösung mit einem pH-Wert von 9. Gemäß der Gelpermeationschromatographie (Eichung mit Hilfe eines Polyacrylatstandards) wurde ein mittleres Molekulargewicht nach dem Gewichtsmittel $M_w$ von 6000 und ein Molekulargewicht nach dem Zahlenmittel $M_n$ von 2600 ermittelt.

Beispiele 1 bis 6

Herstellung der Umsetzungsprodukte 1 bis 6

In einem 100 ml fassenden Erlenmeyer-Kolben wird die in Tabelle 1 jeweils angegebene Menge an Natriumhydroxid vorgelegt und in 20 ml Wasser gelöst. Dann trägt man unter Eiskühlung 0,1 Mol der in Tabelle 1 angegebenen Aminosäure portionsweise ein und rührt das Reaktionsgemisch solange unter Kühlung in einem Eisbad bis eine klare Lösung des Aminosäuresalzes resultiert. Dann fügt man jeweils 10 g Polyasparaginsäureimid (entsprechend 0,1 mol Imideinheiten) in einer Portion zu und rührt die entstehende Aufschlämmung für die in Tabelle I angegebene Zeit und Temperatur. Danach erhält man eine bräunliche klare bis leicht trübe Lösung.

Der Fortschritt der Reaktion ist daran zu erkennen, daß sich das unlösliche Polyasparaginsäureimid allmählich auflöst. Der nach der Reaktion resultierende pH-Wert ist in Tabelle 1 angegeben. Eine eventuell nach Beendigung der Umsetzung verbleibende Trübung des Reaktionsgemisches kann durch Zugabe von 15 %iger wäßriger Natronlauge bis zu einem pH-Wert von 12 bis 13 beseitigt werden. Die klare Lösung kann danach auf den gewünschten pH-Wert

eingestellt werden, ohne daß Niederschläge oder Trübungen entstehen.

Tabelle 1

| Beisp. | NaOH [mol] | [g] | 0,1 mol Aminosäure [g] | Reaktionsbedingungen [Zeit] | [Temp.°C] | Bemerkungen | Amidartig gebundener Anteil [%] an Strukturen III und IV |
|---|---|---|---|---|---|---|---|
| 1 | 0,2 | 8 | 13,3 DL-Asparaginsäure | 8 | 50 | trübe viskose Reaktionslösung, pH=11 | 55 |
| 2 | 0,2 | 8 | 13,3 L-Asparaginsäure | 8 | 50 | trübe viskose Reaktionslösung, pH=11 | 26 |
| 3 | 0,1 | 4 | 7,5 Glycin | 2 | 40 | schnell verlaufende Reaktion, klare Reaktionslösung, pH=10 | 60 |
| 4 | 0,1 | 4 | 8,9 ß-Alanin | 2 | 20-40 | Reaktion bereits bei Raumtemperatur, klare Reaktionslösung, pH=10 | 50 |
| 5 | 0,1 | 4 | 12,5 Taurin | 2 | 20-40 | Reaktion schon bei Raumtemperatur, Reaktionsgemisch mit 30 ml Wasser verdünnt zu einer klaren Lösung | 50 |
| 6 | 0,2 | 8 | 18,2 L-Lysinhydrochlorid | 2 | 20 | klare Reaktionslösung pH=11 | 50 |

Die in Tabelle I beschriebenen Umsetzungsprodukte werden in den folgenden Beispielen bezüglich ihres Dispergiervermögens (CD-Test) geprüft.

CD-Test (Clay-Dispergiertest)

Als Modell für partikulären Schmutz wird feingemahlener China-Clay SPS 151 benutzt. 1 g Clay wird unter Zusatz von 1 ml einer 0,1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60-minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, desto höher sind die gemessenen Trübungswerte und um so stabiler ist die Dispersion. Als zweite physikalische Meßgröße wird die Dispersionskonstante bestimmt, die das zeitliche Verhalten des Sedimentationsprozesses beschreibt. Da der Sedimentationsprozeß annähernd durch ein monoexponentielles Zeitgesetzt beschrieben werden kann, gibt $\bar{\tau}$ die Zeit an, in der die Trübung auf 1/e-tel des Ausgangszustandes zum Zeitpunkt t=O abfällt.

Je höher ein Wert für ist, um so langsamer setzt sich die Dispersion ab.

Tabelle 2

| Beisp. | Umsetzungsprodukt gemäß Beispiel | Trübung in NTU | | | $\bar{\tau}$ [min] |
|---|---|---|---|---|---|
| | | t=O | t=30 (min) | t=60 | |
| 7 | 1 | 740 | 640 | 590 | 283,7 |
| 8 | 2 | 750 | 630 | 580 | 261,4 |
| 9 | 3 | 760 | 650 | 610 | 324,4 |
| 10 | 4 | 760 | 620 | 590 | 358,4 |
| 11 | 5 | 750 | 630 | 590 | 305,7 |
| 12 | 6 | 750 | 640 | 600 | 319,3 |
| Vergleichsbeisp. 1 | | 740 | 620 | 520 | 170,0 |

Wie aus den Ergebnissen in Tabelle 2 zu erkennen ist, besitzen die Umsetzungsprodukte aus Polyasparaginsäureimiden und Aminosäuren, die Polyaspartylaminosäuren enthalten, bessere dispergierende Eigenschaften als Polynatriumaspartat, das durch alkalische Hydrolyse von Polyasparaginsäureimid hergestellt wird.

**Patentansprüche**

1. Verfahren zur Herstellung von Umsetzungsprodukten aus Polyasparaginsäureimiden und Aminosäuren, dadurch gekennzeichnet, daß man Aminosäuren mit Polyasparaginsäureimiden in wäßrigem Medium bei pH-Werten reagieren läßt, bei denen mindestens 5 % der Aminogruppen der Aminosäuren in nicht protonierter Form im Gleichgewicht mit der protonierten Form vorliegen.

2. Verwendung der nach Anspruch 1 erhältlichen Umsetzungsprodukte als Zusatz zu Wasch- und Reinigungsmitteln.

3. Verwendung der nach Anspruch 1 erhältlichen Umsetzungsprodukte als Scale-Inhibitor.

4. Verwendung der nach Anspruch 1 erhältlichen Umsetzungsprodukte als Dispergiermittel.

**Claims**

1. A process for preparing products of the reaction of polyaspartimides and amino acids, which comprises reacting amino acids with polyaspartimides in aqueous medium at pH values at which at least 5% of the amino groups in the amino acids are in non-protonated form in equilibrium with the protonated form.

2. The use of the reaction products obtainable as claimed in claim 1 as additive to detergents and cleaners.

3. The use of the reaction products obtainable as claimed in claim 1 as scale inhibitor.

4. The use of the reaction products obtainable as claimed in claim 1 as dispersant.

**Revendications**

1. Procédé de préparation de produits de réaction de polyaspartimides et d'amino-acides, caractérisé en ce que l'on fait réagir les amino-acides avec les polyaspartimides en milieu aqueux à des valeurs de pH auxquelles au moins 5% des groupements amino des amino-acides se trouve sous forme non protonée en poids égal avec la forme protonée.

2. Utilisation des produits de réaction obtenus selon la revendication 1, en tant que produits d'addition à des agents de lavage et de nettoyage.

3. Utilisation des produits de réaction obtenus selon la revendication 1, comme inhibiteurs d'entartrage.

4. Utilisation de produits de réaction selon le procédé de la revendication 1, comme agents de dispersion.